# EUROPEAN PATENT SPECIFICATION

(11) **EP 3 062 545 B1**
(45) Date of publication and mention of the grant of the patent: **31.01.2018**
(21) Application number: 14855284.7
(22) Date of filing: 22.10.2014
(51) Int. Cl.: H04W 8/22, H04W 72/04

(54) **MOBILE COMMUNICATION METHOD, MOBILE COMMUNICATION SYSTEM, AND RADIO BASE STATION**
MOBILKOMMUNIKATIONSVERFAHREN, MOBILKOMMUNIKATIONSSYSTEM UND FUNKBASISSTATION
PROCÉDÉ DE COMMUNICATION MOBILE, SYSTÈME DE COMMUNICATION MOBILE, ET STATION DE BASE RADIO

(30) Priority: 25.10.2013 JP 2013222356
(43) Date of publication of application: 31.08.2016
(73) Proprietor: NTT DOCOMO, INC., Chiyoda-ku Tokyo 100-6150 (JP)
(72) Inventor: SASAKI, Yusuke, Tokyo 100-6150 (JP); FUKAZAWA, Kenji, Tokyo 100-6150 (JP); KAWABE, Yasuhiro, Tokyo 100-6150 (JP); MATSUTANI, Hideyuki, Tokyo 100-6150 (JP); NAKAMURA, Yuichiro, Tokyo 100-6150 (JP); HAPSARI, Wuri Andarmawanti, Tokyo 100-6150 (JP)
(74) Representative: Hoffmann Eitle
(86) International application number: PCT/JP2014/078030
(87) International publication number: WO 2015/060327

(56) References cited:
- WO-A1-2008/155290
- WO-A1-2011/125675
- WO-A1-2012/128205
- JP-A- 2014 179 897
- US-A1- 2009 170 426
- US-A1- 2012 184 281
- ERICSSON ET AL: "Transfer of large size UE EUTRA capabilities", 3GPP DRAFT; R2-130569 UE EUTRA CAP AT HO FROM GERAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 19 January 2013 (2013-01-19), XP050668405, Retrieved from the Internet: URL:http://www.3gpp.org/ftp/tsg_ran/WG2_RL 2/TSGR2_81/Docs/ [retrieved on 2013-01-19]
- 'E-UTRA UE Capability size problem in UTRAN and E-UTRAN' 3GPP TSG- RAN2#83BIS R2-133602 XP050752695
- 'D iscussion on sending UE-EUTRA-Capability in GERAN/NAS' 3GPP TSG-RAN2 MEETING #81BIS R2- 131248 19 April 2013, XP050699464

## Description

### TECHNICAL FIELD

The present invention relates to a mobile communication method, a mobile communication system, and a radio base station.

### BACKGROUND ART

In the LTE (Long Term Evolution) system, a mobile station UE transmits, by using "UE Capability Information", to a radio base station eNB, "UE-EUTRA-Capability" indicating a capability of the mobile station UE within the LTE system (see Non-Patent Document 1).

The radio base station eNB selects, based on the "UE-EUTRA-Capability", the control that should be performed on the mobile station UE.

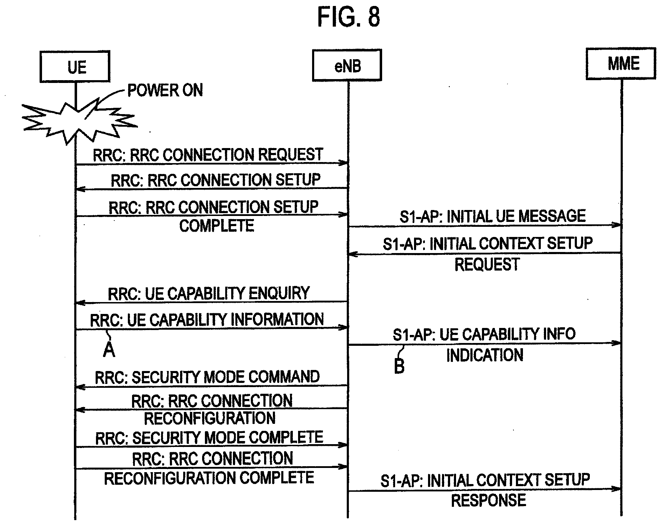

For example, as shown in FIG. 8, at Step A, a mobile station UE notifies, by using "UE Capability Information", a radio base station eNB of the "UE-EUTRA-Capability" in Attach procedure of the mobile station UE. At Step B, a radio base station eNB notifies, by using the "UE Capability Information", a mobility management node MME of the "UE-EUTRA-Capability", and the mobility management node MME stores the "UE-EUTRA-Capability" in a memory.

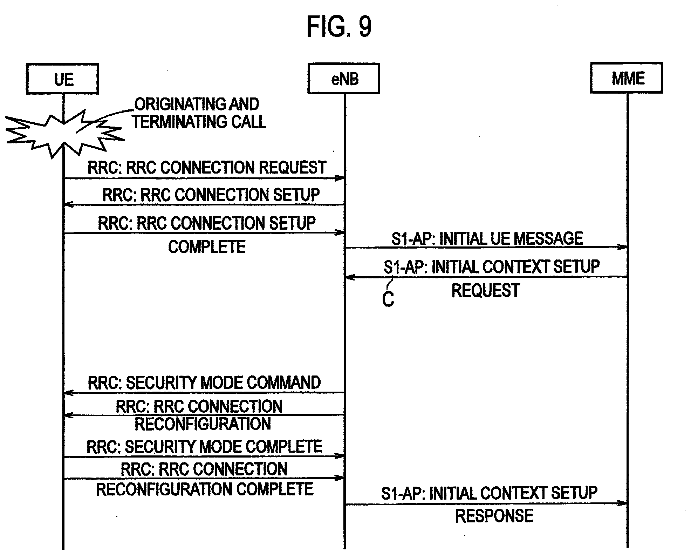

Subsequently, as shown in FIG. 9, in an originating and terminating call procedure performed by the mobile station UE, the mobility management node MME notifies, by using "Initial Context Setup Request", the radio base station eNB of the stored "UE-EUTRA-Capability".

Therefore, in the originating and terminating call procedure performed by the mobile station UE, the radio base station eNB does not have to inquire the mobile station UE for the "UE-EUTRA-Capability".

However, if the mobility management node MME does not notify, by using the "Initial Context Setup Request", the radio base station eNB of the "UE-EUTRA-Capability", even in a procedure other than the Attach procedure, the radio base station eNB acquires the "UE-EUTRA-Capability" from the mobile station UE via the "UE Capability Information". US 2012/0184281 discloses a method for reporting a capability of a User Equipment (UE) supporting advanced functions such as Carrier Aggregation (CA). In particular according to the method disclosed in D9, the eNB transmits a UE capability enquiry message to the UE in order to request the UE to report its capability using a parameter named RAT type; in response the UE transmits to the eNB a UE capability information message including band combination information for each band combination supported by the UE.

WO 2008/155290A1 describes a method enabling a user equipment to seek a connection to a network via a base station, receive system information, and determine in response to the system information a set of user equipment capabilities, if any, to disclose to the base station for purposes of being redirected by the base station.

3GPP draft R2-130569 describes transfer of large size UE EUTRAN capabilities and proposes introducing a new mechanism to be used at handover from GERAN to EUTRAN , where the target eNB fetches the capabilities from the UE after completed handover.

US 2009/170426 A! describes a method of managing a UE capability at a MME via a base station of a network in a wireless communication system. The method comprises selectively forwarding an indication of a UE capability stored in the MME to the base station or sending a request from the MME to the base station to obtain a current UE capability from the UE in accordance with whether or not a certain condition is satisfied.

### PRIOR ART DOCUMENT

### NON-PATENT DOCUMENT

[Non-Patent Document 1] 3GPP TS 36.331 Section 6.3.6 "UE-EUTRA-Capability"

### SUMMARY OF THE INVENTION

However, when a new Release of the LTE system comes, there is a trend that the size of "UE-EUTRA-Capability" is increased.

Therefore, when the radio base station eNB acquires the "UE-EUTRA-Capability" from the mobile station UE, there is a problem that the size of the "UE-EUTRA-Capability" may exceed the size that can be stored in the radio base station eNB.

Moreover, when a radio base station eNB notifies, by using the "UE Capability Information", the mobility management node MME of the "UE-EUTRA-Capability", there is a problem that the size of the "UE-EUTRA-Capability" may exceed the size that can be stored in the mobility management node MME.

Moreover, in "Intra-RAT HO" performed via S1 interface, when transmitting the "UE-EUTRA-Capability" to a handover destination radio base station T-eNB via the mobility management node MME, there is a problem that the size of the "UE-EUTRA-Capability" may exceed the size that can be stored in the mobility management node MME.

Moreover, in the "Inter-RAT HO" performed from a cell under the control of E-UTRAN with respect to a cell under the control of UTRAN/GERAN, when transmitting the "UE-EUTRA-Capability" from the E-UTRAN to the UTRAN, there is a problem that the size of the "UE-EUTRA-Capability" may exceed the storage region for information element included in a signal used on the UTRAN side.

The present invention was made in view of the above discussion. It is an object of the present invention to provide a mobile communication method, a mobile communication system, and a radio base station that can perform appropriate communication control even if the size of the "UE-EUTRA-Capability" is increased.
This object is accomplished by the subject matter of the independent claims. The dependent claims concern particular embodiments.

According to a first aspect of the present invention, a mobile communication method includes a mobile station notifying a first device of capability information indicating a capability of the mobile station; the first device deleting, when a size of the capability information exceeds a size that can be stored in the first device or a second device, a predetermined capability from the capability information; and the first device notifying the second device of a capability deleted from the capability information or a remaining capability that is not deleted from the capability information.

According to a second aspect of the present invention, a mobile communication system includes a first device and a second device. The first device deletes, when a size of capability information acquired from a mobile station indicating a capability of the mobile station exceeds a size that can be stored in the first device or the second device, a predetermined capability from the capability information, and the first device notifies the second device of a capability deleted from the capability information or a remaining capability that is not deleted from the capability information.

According to a third aspect of the present invention, a radio base station includes a receiving unit that acquires from a mobile station capability information indicating a capability of the mobile station; a controlling unit that deletes, when a size of the capability information exceeds a size that can be stored in the radio base station or a mobility management node, a predetermined capability from the capability information; and a transmitting unit that notifies the mobility management node of a capability deleted from the capability information or a remaining capability that is not deleted from the capability information.

According to a fourth aspect of the present invention, a mobile communication method includes a radio base station inquiring to a mobile station for a part of capability information including a capability of the mobile station; the mobile station notifying the radio base station of the part of the capability information including the capability of the mobile station; and the radio base station notifying a mobility management node of the part of the capability information.

### BRIEF DESCRIPTION OF DRAWINGS

FIG. 1 is an overall structural diagram of a mobile communication system according to a first embodiment of the present invention.
FIG. 2 is a functional block diagram of a radio base station eNB according to the first embodiment of the present invention.
FIG. 3 is a sequence diagram indicating an operation of the mobile communication system according to the first embodiment of the present invention.
FIG. 4 is a flowchart indicating an operation of the radio base station eNB according to the first embodiment of the present invention.
FIG. 5 is a sequence diagram indicating an operation of a mobile communication system according to a first modification example of the present invention.
FIG. 6 is another sequence diagram indicating an operation of the mobile communication system according to the first modification example of the present invention.
FIG. 7 is a sequence diagram indicating an operation of a mobile communication system according to a second modification example of the present invention.
FIG. 8 is a view for explaining a notice method in Attach procedure of conventional "UE-EUTRA-Capability".
FIG. 9 is a view for explaining a notice method in an originating and terminating call procedure of the conventional "UE-EUTRA-Capability".

### MODES FOR CARRYING OUT THE INVENTION

Mobile Communication System According to First embodiment of Present invention

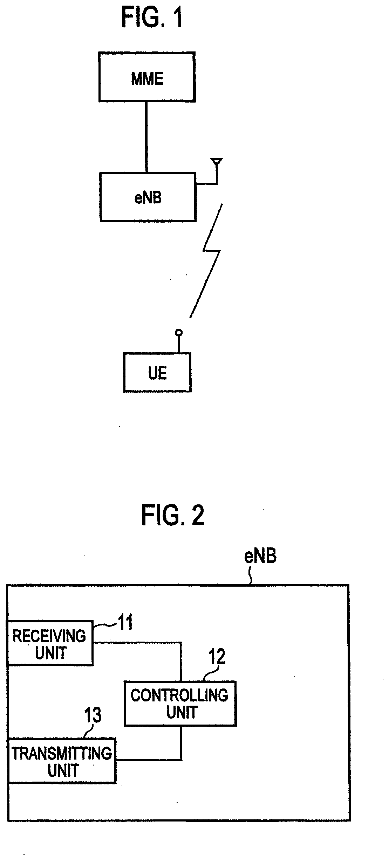

With reference to FIGS. 1 to 4, a mobile communication system according to a first embodiment of the present invention is explained below. As the mobile communication system according to the present embodiment, a mobile communication system of the LTE system is exemplified; however, the present invention is also applicable to a mobile communication system other than of the LTE system.

As shown in FIG. 1, the mobile communication system according to the present embodiment includes a mobility management node MME, a radio base station eNB, and a mobile station UE.

As shown in FIG. 2, the radio base station eNB according to the present embodiment includes a receiving unit 11, a controlling unit 12, and a transmitting unit 13.

The receiving unit 11 receives various signals from the radio base station eNB. The controlling unit 12 performs control on the communication between the radio base station eNB. The transmitting unit 13 transmits various signals to the radio base station eNB.

For example, the receiving unit 11 acquires, in Attach procedure or a handover procedure of the mobile station UE, "UE-EUTRA-Capability" from the mobile station UE via "UE Capability Information".

Moreover, when a size of the "UE-EUTRA-Capability" acquired by the receiving unit 11 exceeds a size that can be stored in the radio base station eNB or the mobility management node MME, the controlling unit 12 deletes a predetermined capability from the "UE-EUTRA-Capability".

The controlling, unit 12 deletes, as the above-mentioned predetermined capability, for example, at least one between a capability that is not used in an operator of the radio base station eNB and a capability relating to a service having a low priority.

The following can be considered as examples of the capability that is not used in the operator of the radio base station eNB: a capability relating to a band that is not used in the operator of the radio base station eNB, a capability relating to a carrier aggregation (CA: Carrier Aggregation), a capability relating to a service that is not provided by the operator of the radio base station eNB, and the like.

Moreover, as the capability relating to the service having the low priority, a capability relating to a service that is not used by the mobile station UE, and the like, can be considered.

Furthermore, after having deleted one between the capability that is not used in the operator of the radio base station eNB and the capability relating to the service having the low priority as the above-mentioned predetermined capability, the controlling unit 12 also deletes the other one if the size of the "UE-EUTRA-Capability" still exceeds the size that can be stored in the radio base station eNB or the mobility management node MME.

The controlling unit 12 determines, by using a priority, which one between the capability that is not used in the operator of the radio base station eNB and the capability relating to the service having the low priority is to be deleted first.

Moreover, the transmitting unit 13 notifies, by using the "UE Capability Information", the mobility management node MME of the capability deleted from the "UE-EUTRA-Capability" or the remaining capability that is not deleted from the "UE-EUTRA-Capability".

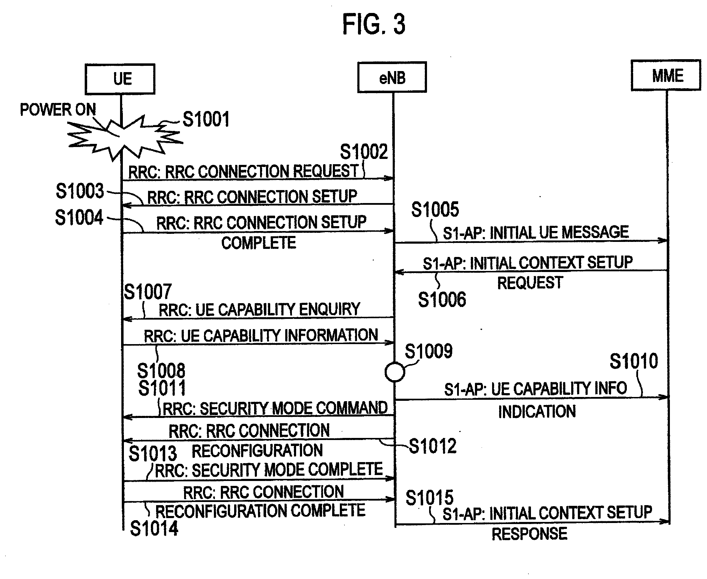

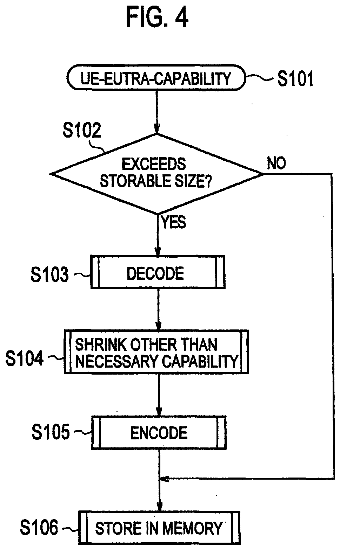

Referring now to FIGS. 3 and 4, an example of an operation of the mobile communication system according to the present embodiment, specifically, the Attach procedure of the mobile station UE in the mobile communication system according to the present embodiment, is explained below.

As shown in FIG. 3, when a user turns on the power of the mobile station UE at Step S1001, the mobile station UE transmits "RRC Connection Request" to the radio base station eNB at Step S1002.

At Step S1003, the radio base station eNB transmits "RRC Connection Setup" to the mobile station UE. AtStepS1004, the mobile station UE transmits "RRC Connection Setup Complete" to the radio base station eNB.

At Step S1005, the radio base station eNB transmits "Initial UE Message" to the mobility management node MME. At Step S1006, the mobility management node MME transmits "Initial Context Setup Request" to the radio base station eNB.

At Step S1007, the radio base station eNB transmits "UE Capability Enquiry" to the mobile station UE to inquire for the "UE-EUTRA-Capability".

At Step S1008, the mobile station UE transmits "UE Capability Information" to the radio base station eNB to notify of the "UE-EUTRA-Capability".

At Step S1009, the radio base station eNB performs a control shown in FIG. 4.

Specifically, as shown in FIG. 4, when the radio base station eNB receives the "UE-EUTRA-Capability" at Step S101, the radio base station eNB determines, at Step S102, if the "UE-EUTRA-Capability" exceeds the size that can be stored in the radio base station eNB or the mobility management node MME.

If the determination result is "YES", the control advances to Step S103, and, if the determination result is "NO" , this control is finished.

The radio base station eNB, at Step S103, executes a decode process on the "UE-EUTRA-Capability", at Step S104, deletes the predetermined capability from the "UE-EUTRA-Capability", at Step S105, executes an encoding process on the remaining capability that is not deleted from the "UE-EUTRA-Capability", and, at Step S106, stores in a memory the "UE-EUTRA-Capability" on which the encoding process was executed.

Referring back to FIG. 3, at Step S1010, the radio base station eNB notifies, by using "UE Capability Info Indication", the mobility management node MME of the "UE-EUTRA-Capability" that was subjected to the control (shrink control) at Step S1009.

Moreover, the radio base station eNB transmits, at Step S1011, "Security Mode Command" to the mobile station UE, and transmits, at Step S1012, "RRC Connection Reconfiguration" .

The mobile station UE transmits, at Step S1013, "Security Mode Complete" to the radio base station eNB, and transmits, at Step S1014, "RRC Connection Reconfiguration Complete".

At Step S1015, the radio base station eNB transmits "Initial Context Setup Response" to the mobility management node MME.

### First Modification Example

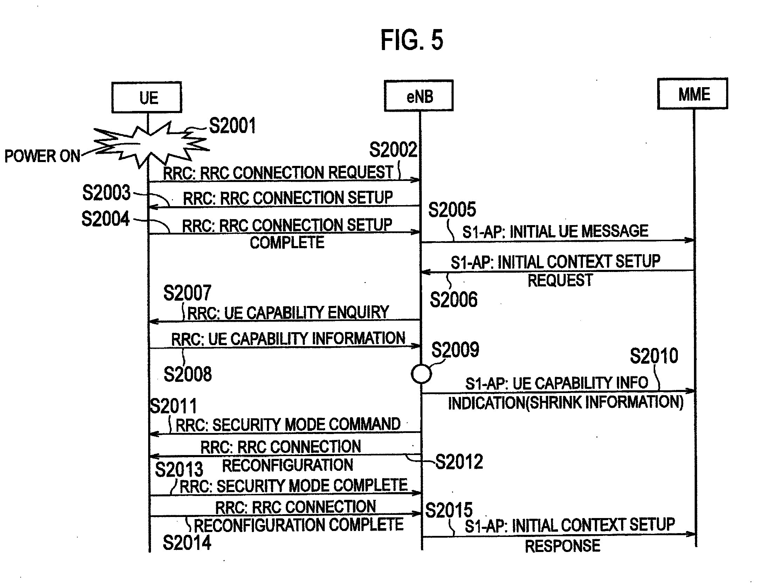

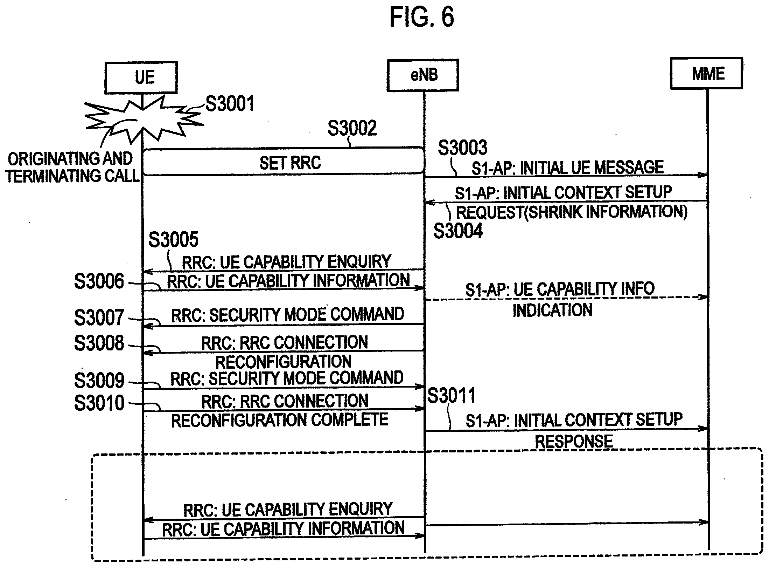

Referring now to FIGS. 5 and 6, a mobile communication system according to a first modification example of the present invention is explained below while focusing on the differences between the mobile communication system according to the above-explained first embodiment.

In the mobile communication system according to the first modification example, the transmitting unit 13 of the radio base station eNB notifies the mobility management node MME of the "UE-EUTRA-Capability" from which the predetermined capability has been deleted as well as notifies, as shrink information, of the fact that the predetermined capability has been deleted.

The transmitting unit 13 of the radio base station eNB also notifies, as the shrink information, the mobility management node MME of the details of the deleted predetermined capability.

Moreover, when, in an originating and terminating call procedure performed by the mobile station UE, the receiving unit 11 of the radio base station eNB receives from the mobility management node MME the "UE-EUTRA-Capability" from which the predetermined capability has been deleted, the receiving unit 11 can be configured to acquire "UE-EUTRA-Capability" from the mobile station UE again.

When the receiving unit 11 of the radio base station eNB is notified of the shrink information by the mobility management node MME, the receiving unit 11 can be configured to determine that it received from the mobility management node MME the "UE-EUTRA-Capability" from which the predetermined capability had been deleted.

Referring now to FIGS. 5 and 6, an example of an operation of the mobile communication system according to the first modification example is explained below.

Firstly, referring now to FIG. 5, Attach procedure of the mobile station UE in the mobile communication system according to the first modification example is explained.

As shown in FIG. 5, the operations mentioned at Steps S2001 to S2009 are the same as those mentioned at Steps S1001 to S1009 of FIG. 3.

At Step S2010, the radio base station eNB notifies, by using the "UE Capability Info Indication", the mobility management node MME of the "UE-EUTRA-Capability" that was subjected to the control (shrink control) at Step S2009.

The radio base station eNB notifies, by using the "UE Capability Info Indication", a flag indicating that the predetermined capability has been deleted (i.e., the shrink control has been performed), and the shrink information including information indicating the capability that has been deleted by the shrink control.

Moreover, the operations mentioned at Steps S2011 to S2015 are the same as those mentioned at Steps S1011 to S1015 of FIG. 3.

Secondly, referring now to FIG. 6, the originating and terminating call procedure performed by the mobile station UE in the mobile communication system according to the first modification example is explained below. It is assumed that the mobility management node MME stores therein a capability for connection with the mobile station UE and a capability relating to a service associated with the originating and terminating call procedure.

As shown in FIG. 6, when, at Step S3001, the originating and terminating call procedure performed by the mobile station UE is started, at Step S3002, RRC connection is set between the mobile station UE and the radio base station eNB.

At Step S3003, the radio base station eNB transmits "Initial UE Message" to the mobility management node MME, and, at Step S3004, the mobility management node MME transmits "Initial Context Setup Request" to the radio base station eNB.

The mobility management node MME notifies, by using the "Initial Context Setup Request", the radio base station eNB of the shrink information in addition to the stored "UE-EUTRA-Capability".

The radio base station eNB determines, based on the shrink information, that the predetermined capability has been deleted from the notified "UE-EUTRA-Capability", and at Step S3005, transmits "UE Capability Enquiry" to the mobile station UE again to inquire for the "UE-EUTRA-Capability".

At Step S3006, the mobile station UE transmits "UE Capability Information" to the radio base station eNB to notify of the "UE-EUTRA-Capability".

Because the radio base station eNB has already notified to the mobility management node MME of the "UE-EUTRA-Capability", it does not again notify the mobility management node MME of the "UE-EUTRA-Capability".

The radio base station eNB transmits, at Step S3007, "Security Mode Command" to the mobile station UE, and transmits, at Step S3008, "RRC Connection Reconfiguration".

The mobile station UE transmits, at Step S3009, "Security Mode Complete" to the radio base station eNB, and transmits, at Step S3010, "RRC Connection Reconfiguration Complete".

At Step S3011, the radio base station eNB transmits "Initial Context Setup Response" to the mobility management node MME.

When, in the originating and terminating call procedure performed by the mobile station UE, the radio base station eNB does not have to inquire for the "UE-EUTRA-Capability" to the mobile station UE, after completion of the originating and terminating call procedure performed by the mobile station UE (i.e., after Step S3011), Steps S3005 and S3006 can be executed.

### Second Modification Example

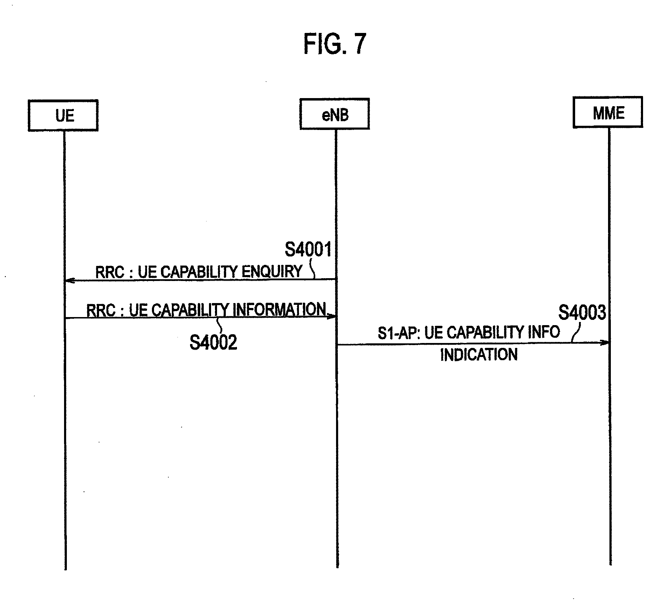

Referring now to FIG. 7, a mobile communication system according to a second modification example of the present invention is explained below while focusing on the differences between the mobile communication system according to the above-mentioned first embodiment.

Referring now to FIG. 7, an example of an operation of the mobile communication system according to the second modification example of the present invention is explained below.

As shown in FIG. 7, for example, if the size of the "UE-EUTRA-Capability" acquired from the mobile station UE exceeds the size that can be stored in the radio base station eNB or the mobility management node MME, and the like, at Step S4001, the radio base station eNB inquires, by using "UE Capability Enquiry", to mobile station UE for a part of the "UE-EUTRA-Capability".

At Step S4002, the mobile station UE notifies, by using "UE Capability Information", to radio base station eNB of the part of the "UE-EUTRA-Capability".

At Step S4003, the radio base station eNB notifies, by using "UE Capability Info Indication", the mobility management node MME of the part of the "UE-EUTRA-Capability" .

### Third Modification Example

Application of the mobile communication systems of the first embodiment, the first modification example, and the second modification example are not limited only to the mobile communication system of the LTE system, and they can be applied to a mobile communication system after the fourth generation, a mobile communication system of the WCDMA system, a mobile communication system of the GSM system, and the like.

Moreover, the application of the mobile communication systems of the first embodiment, the first modification example, and the second modification example are not limited to only between the radio base station eNB and the mobility management node MME, and they can be applied to between a radio link control station RNC and a core network device (e. g. , mobility management node MME), between a radio access network device (or, a core network device) of a handover origin and a radio access network device (or, a core network device) of a handover destination, and the like.

Furthermore, instead of the "UE-EUTRA-Capability", desired information can be used to notify of the capability of the mobile station UE.

The above-explained invention can be represented as below.

According to a first aspect of the present embodiment, a mobile communication method includes a mobile station UE notifying a radio base station eNB (first device) of "UE-EUTRA-Capability" (capability information indicating a capability of the mobile station) ; the radio base station eNB deleting, when a size of the "UE-EUTRA-Capability" exceeds a size that can be stored in the radio base station eNB or a mobility management node MME (second device), a predetermined capability from the "UE-EUTRA-Capability"; and the radio base station eNB notifying the mobility management node MME of a capability deleted from the "UE-EUTRA-Capability" or a remaining capability that is not deleted from the "UE-EUTRA-Capability".

According to a second aspect of the present embodiment, a mobile communication system includes a radio base station eNB and a mobility management node MME, wherein the radio base station eNB deletes, when a size of "UE-EUTRA-Capability" acquired from a mobile station UE exceeds a size that can be stored in the radio base station eNB or the mobility management node MME, a predetermined capability from the "UE-EUTRA-Capability", and the radio base station eNB notifies the mobility management node MME of a capability deleted from the "UE-EUTRA-Capability" or a remaining capability that is not deleted from the "UE-EUTRA-Capability" .

According to a third aspect of the present embodiment, a radio base station eNB includes a receiving unit 11 that acquires from a mobile station UE "UE-EUTRA-Capability" ; a controlling unit 12 that deletes, when a size of the "UE-EUTRA-Capability" exceeds a size that can be stored in the radio base station eNB or a mobility management node MME, a predetermined capability from the "UE-EUTRA-Capability" ; and a transmitting unit 13 that notifies the mobility management node MME of a capability deleted from the "UE-EUTRA-Capability" or a remaining capability that is not deleted from the "UE-EUTRA-Capability".

According to the above aspects, because the size of the "UE-EUTRA-Capability" can be reduced in the radio base station eNB, unnecessary transmission of the capability information of the mobile station UE can be reduced, and a memory size in the radio base station eNB and the mobility management node MME can be reduced.

In the third aspect according to the present embodiment, the controlling unit 12 can be configured to delete, as the predetermined capability, at least one of a capability that is not used in an operator of the radio base station eNB and a capability relating to a service having a low priority.

According to this aspect, by deleting the capability information that is less likely to be used after Attach procedure of the mobile station UE, the size of the "UE-EUTRA-Capability" can be reduced without affecting communication after the Attach procedure of the mobile station UE.

In the third aspect according to the present embodiment, the controlling unit 12 can be configured, after deleting, as the predetermined capability, either the capability that is not used in the operator of the radio base station eNB or the capability relating to the service having the low priority, if still the size of the "UE-EUTRA-Capability" exceeds the size that can be stored in the radio base station eNB or the mobility management node MME, to delete the other capability.

According to this aspect, the capability information that is less likely to be used after the Attach procedure of the mobile station UE can be deleted effectively.

In the third aspect according to the present embodiment, the transmitting unit 13 can be configured to notify the mobility management node MME of a fact that the predetermined capability has been deleted in addition to notifying of the capability deleted from the "UE-EUTRA-Capability" or the remaining capability that is not deleted from the "UE-EUTRA-Capability".

According to this aspect, the radio base station eNB can again acquire, in an originating and terminating call procedure of the mobile station UE, based on a notice, "UE-EUTRA-Capability" from the mobile station UE.

In the third aspect according to the present embodiment, in the originating and terminating call procedure by the mobile station UE, the receiving unit 11 again acquires, upon receiving from the mobility management node MME the capability deleted from the "UE-EUTRA-Capability" or the remaining capability that is not deleted from the "UE-EUTRA-Capability", "UE-EUTRA-Capability" from the mobile station UE.

According to this aspect, the possibility of affecting the communication after the Attach procedure of the mobile station UE can be further reduced.

According to a fourth aspect of the present embodiment, a mobile communication method includes a radio base station eNB inquiring to a mobile station UE for a part of "UE-EUTRA-Capability"; the mobile station UE notifying the radio base station eNB of the part of the "UE-EUTRA-Capability" ; and the radio base station eNB notifying a mobility management node MME of the part of the "UE-EUTRA-Capability".

According to this aspect, because a size of the "UE-EUTRA-Capability" that needs to be stored in the radio base station eNB or the mobility management node MME can be reduced, unnecessary transmission of capability information of the mobile station UE can be reduced, and a memory size in the radio base station eNB and the mobility management node MME can be reduced.

The operations of the mobility management node MME, the radio base station eNB, and the mobile station UE can be realized by hardware, can be realized by a software module executed by a processor, or can be realized by the combination of these.

The software module can be stored in a storage medium having a desired form such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to a processor so that the processor can read / write information from / in the storage medium. Alternatively, the storage medium can be integrated in a processor. Alternatively, the storage medium and the processor can be arranged in ASIC. The ASIC can be arranged in the mobility management node MME, the radio base station eNB, and the mobile station UE. Alternatively, the storage medium and the processor can be arranged as discrete components in the mobility management node MME, the radio base station eNB, and the mobile station UE.

The present invention has been explained in detail by using the above mentioned embodiments; however, it is obvious for a person skilled in the art that the present invention is not limited to the embodiments explained in the present description. The present invention can be implemented by way of modifications and changes without deviating from the gist and the range of the present invention specified by the claims. Accordingly, the indication of the present description aims at exemplary explanation, and has no intention to limit to the present invention.

### INDUSTRIAL APPLICABILITY

As explained above, according to the present invention, it is possible to provide a mobile communication method, a mobile communication system, and a radio base station that can perform appropriate communication control even if the size of the "UE-EUTRA-Capability" is increased.

### EXPLANATION OF REFERENCE NUMERALS

- MME: Mobility management node
- UE: Mobile station
- eNB: Radio base station
- 11: Receiving unit
- 12: Controlling unit
- 13: Transmitting unit

## Claims

1. A mobile communication system including a mobile station, UE, a radio base station, eNB, and a mobility management node, MME, wherein the radio base station, eNB, is configured to inquire to the mobile station, UE, for a part of UE-EUTRA capability information including a capability of the mobile station relating to carrier aggregation;
the mobile station (UE) is configured to notify the radio base station, eNB, of the part of the UE-EUTRA capability information including the capability of the mobile station relating to carrier aggregation; and the radio base station, eNB, is configured to notify the mobility management node, MME, of the part of the UE-EUTRA capability information.

2. A radio base station, eNB, comprising :
a transmitting unit (11) configured to inquire to a mobile station, UE, for a part of UE-EUTRA capability information including a capability of the mobile station relating to carrier aggregation and to notify a mobility management node, MME, of the part of the UE-EUTRA capability information

3. A mobile communication method comprising:
a radio base station, eNB, inquiring (S4001) to a mobile station, UE, for a part of UE-EUTRA capability information including a capability of the mobile station relating to carrier aggregation;
the mobile station, UE, notifying (S4002) the radio base station, eNB, of the part of the UE-EUTRA capability information including the capability of the mobile station; and
the radio base station, eNB, notifying (S4003) a mobility management node, MME, of the part of the UE-EUTRA capability information.

## Patentansprüche

1. Mobilkommunikationssystem, das eine Mobilstation, UE, eine Funkbasisstation, eNB, und einen Mobilitätverwaltungsknoten, MME, einschließt, wobei
die Funkbasisstation, eNB, dazu konfiguriert ist, von der Mobilstation, UE, einen Teil von UE-EUTRA-Fähigkeitsinformationen zu erfragen, der eine Fähigkeit der Mobilstation in Bezug auf Trägeraggregation einschließt;
die Mobilstation (UE) dazu konfiguriert ist, die Funkbasisstation, eNB, über den Teil der UE-EUTRA-Fähigkeitsinformationen, der die Fähigkeit der Mobilstation in Bezug auf Trägeraggregation einschließt, zu benachrichtigen; und
die Funkbasisstation, eNB, dazu konfiguriert ist, den Mobilitätverwaltungsknoten, MME, über den Teil der UE-EUTRA-Fähigkeitsinformationen zu benachrichtigen.

2. Funkbassstation, eNB, umfassend:
eine Sendeeinheit (11), die dazu konfiguriert ist, von einer Mobilstation, UE, einen Teil von UE-EUTRA-Fähigkeitsinformationen zu erfragen, der eine Fähigkeit der Mobilstation in Bezug auf Trägeraggregation einschließt, und einen Mobilitätverwaltungsknoten, MME, über den Teil der UE-EUTRA-Fähigkeitsinformationen zu benachrichtigen.

3. Mobilkommunikationsverfahren, umfassend:
Erfragen (S4001), durch eine Funkbasisstation, eNB, von einer Mobilstation, UE, eines Teils von UE-EUTRA-Fähigkeitsinformationen, der eine Fähigkeit der Mobilstation in Bezug auf Trägeraggregation einschließt;
Benachrichtigen (S4002), durch die Mobilstation, UE, der Funkbasisstation, eNB, über den Teil der UE-EUTRA-Fähigkeitsinformationen, der die Fähigkeit der Mobilstation einschließt; und
Benachrichtigen (S4003), durch die Funkbasisstation, eNB, eines Mobilitätverwaltungsknotens, MME, über den Teil der UE-EUTRA-Fähigkeitsinformationen.

## Revendications

1. Système de communication mobile incluant une station mobile, UE, une station de base radio, eNB, et un noeud de gestion de mobilité, MME, dans lequel la station de base radio, eNB, est configurée pour demander à la station mobile, UE, une partie des informations de capacité UE-EUTRA incluant une capacité de la station mobile relative à une agrégation de porteuses ;
la station mobile (UE) est configurée pour notifier à la station de base radio, eNB, la partie des informations de capacité UE-EUTRA incluant la capacité de la station mobile relative à une agrégation de porteuses ; et
la station de base radio, eNB, est configurée pour notifier au noeud de gestion de mobilité, MME, la partie des informations de capacité UE-EUTRA.

2. Station de base radio, eNB, comprenant :
une unité d'émission (11) configurée pour demander à une station mobile, UE, une partie des informations de capacité UE-EUTRA incluant une capacité de la station mobile relative à une agrégation de porteuses et pour notifier à un noeud de gestion de mobilité, MME, la partie des informations de capacité UE-EUTRA.

3. Procédé de communication mobile comprenant :
la demande (S4001) d'une station de base radio, eNB, à une station mobile, UE, d'une partie des informations de capacité UE-EUTRA incluant une capacité de la station mobile relative à une agrégation de porteuses ;
la notification (S4002) de la station mobile, UE, à la station de base radio, eNB, de la partie des informations de capacité UE-EUTRA incluant la capacité de la station mobile; et
la notification (S4003) de la station de base radio, eNB, à un noeud de gestion de mobilité, MME, de la partie des informations de capacité UE-EUTRA.
